# EUROPEAN PATENT APPLICATION

(11) **EP 4 485 847 A1**
(43) Date of publication of application: **01.01.2025**
(21) Application number: 23182578.7
(22) Date of filing: 30.06.2023
(51) Int. Cl.: H04L 9/32, H04L 9/08

(54) **A METHOD FOR DERIVING A CRYPTOGRAPHIC KEY FOR PERFORMING DIGITAL SIGNATURES**

(71) Applicant: Blockdaemon ApS, 8000 Aarhus C (DK)
(72) Inventor: TOFT, Tomas Friis, 8000 Aarhus C (DK); JURIK, Mads Johan, 8000 Aarhus C (DK); JAKOBSEN, Thomas Pelle, 8000 Aarhus C (DK)
(74) Representative: Inspicos P/S

(57) **Abstract**

A method for deriving a cryptographic key for performing a digital signature is disclosed. A shared seed is generated, the shared seed being shared among two or more nodes. A derived shared key and a derived chain code are derived from the shared seed by means of secure multiparty computation performed by the two or more nodes in cooperation, the derived shared key being shared among the two or more nodes. The sharing of the derived shared key is converted into a converted sharing over a finite field defined by a digital signature scheme, the converted sharing of the key thus being in a format suitable for performing digital signatures using the digital signature scheme. Finally, a digital signature is performed by means of the converted sharing of the key and using a signature protocol in accordance with the digital signature scheme.

## Description

### FIELD OF THE INVENTION

The present invention relates to a method for deriving a cryptographic key from a seed being shared among two or more nodes. The derived cryptographic key can be applied for efficiently performing digital signatures using specialized secure multiparty computation.

### BACKGROUND OF THE INVENTION

Digital signatures may be used for ensuring integrity of transmitted data online, for digital transaction, e.g. in the form of transferring digital funds, for authentication of data and/or entities online, etc.

It is often vital to create an offline backup of a secret signing key. Loss of the secret key means that the ability to generate digital signatures is lost. If used to transfer digital funds, losing the secret key thus immediately translates to loss of funds. Creating an offline backup of a secret signing key is a tedious process. Especially so, if a user creates many independent secret signature keys, because then a new offline backup must be created for each new key. It is therefore useful to instead deterministically derive many secret digital signature keys from a single seed. Then the user only needs to create a single initial offline backup of the seed. In case the seed is lost, it may then be restored from the offline backup, and this immediately gives access to all the derived secret keys.

Deriving according to a standardised derivation scheme has important benefits. This lets the user move the seed to another wallet that also follows the standard, and the user will still be able to derive the same keys and hence access the same funds in the new wallet. An example of a standardised key derivation scheme is BIP32 which is used in Bitcoin.

By using a seed which is generated as a secret sharing among a number of nodes, each node holding a share of the seed, instead of allowing a single party to hold the entire seed, and by ensuring that also the derived secret keys are kept as secret sharings among a number of nodes, the risk of the signature system being compromised is reduced, because none of the nodes forms a single point of trust. Such a scheme is sometimes referred to as a 'multiparty signature scheme'. Thus, applying digital signatures by means of a multiparty signature scheme is normally considered highly trustworthy and secure.

Key derivation standards such as BIP32 often require computing a hash or HMAC function of both the seed as well as intermediate derived secret keys. Using secure multiparty computation therefore means that we must compute a hash or HMAC function of a seed or derived secret key that is secret shared. The only known way to do this is to use general multiparty protocols. These general multiparty protocols require a lot of local computation at each node and a lot of communication between the nodes, and are often very slow and inefficient. The existing general multiparty protocols can in principle also be used to perform the digital signature using the derived secret key, but due to their poor performance, it is important to limit the use of these protocols as much as possible.

There exists efficient multiparty protocols designed specifically to perform digital signatures. These protocols are unfortunately not capable of deriving the shared secret key from the seed.

### DESCRIPTION OF THE INVENTION

It is an object of embodiments of the invention to provide a method for deriving a cryptographic key for performing a digital signature, where the resulting key allows digital signatures to be performed with high performance, without requiring high processing power, and without compromising security of the system.

The invention provides a method for deriving a cryptographic key for performing a digital signature, the method comprising the steps of:
- generating a shared seed, the shared seed being shared among two or more nodes,
- deriving a derived shared key and a derived chain code from the shared seed by means of secure multiparty computation performed by the two or more nodes in cooperation, the derived shared key being shared among the two or more nodes,
- converting the sharing of the derived shared key into a converted sharing over a finite field defined by a digital signature scheme, the converted sharing of the key thus being in a format suitable for performing digital signatures using the digital signature scheme, and
- performing a digital signature by means of the converted sharing of the key and using a signature protocol in accordance with the digital signature scheme.

Thus, the method according to the invention is a method for deriving a cryptographic key for performing digital signatures. According to the method, a shared seed is initially generated and shared among two or more nodes. The shared seed may, e.g., be generated by the two or more nodes in cooperation. As an alternative, generating the shared seed may, e.g., involve someone creating the seed elsewhere, splitting the seed into shares, and then distributing the shares among the two or more nodes. In the present context the terms 'shared seed' and 'shared among the two or more nodes' should be interpreted to mean that each of the two or more nodes holds a share of the seed, but none of the nodes holds or has knowledge about the entire seed. Accordingly, none of the nodes forms a single point of trust, in the sense that it is not possible to gain access to, learn or compromise the entire seed by compromising one of the nodes. The shared seed may be shared as a secret sharing among the two or more nodes.

Next, a derived shared key and a derived chain code are derived from the shared seed. This is done by means of secure multiparty computation performed by the two or more nodes in cooperation. Accordingly, the two or more nodes cooperate in deriving the derived shared key and the derived chain code, based on their respective shares of the shared seed. Accordingly, none of the nodes is capable of deriving the derived key and the derived chain code on its own. Instead, the participation of at least a threshold number of the two or more nodes, possibly all of the two or more nodes, is required in order to derive the derived shared key and the derived chain code. The resulting derived shared key is shared among the two or more nodes, similarly to the shared seed as described above.

In the present context the term 'chain code' for a key should be interpreted to mean a bit string which is necessary in order to derive further child keys from the key. Thus, to be able to derive another key from the given key, access to both the (shares of) the key itself, as well as access to the chain code, is required. An example of key derivation using chain codes is BIP32 which is the key derivation scheme used by Bitcoin.

The derived shared key and the derived chain code may be derived directly from the shared seed in a single step or operation. As an alternative, arriving at the derived shared key and the derived chain code may require two or more iterative steps, e.g. resulting in intermediate keys and chain codes. This will be described in further detail below.

Next, the sharing of the derived shared key is converted into a converted sharing over a finite field. The finite field is defined by a digital signature scheme, and the converted shared key resulting from the conversion is, thus, in a format suitable for performing digital signatures using the digital signature scheme which defines the finite field, i.e. for performing digital signatures using an efficient multiparty protocol designed to produce signatures for the digital signature scheme which defines the finite field.

In the present context the term 'field' should be interpreted to mean a set on which the operations of multiplication, addition, subtraction and division are defined and satisfy certain basic rules in the form of the mathematical field axioms. In the present context the term 'finite field' should be interpreted to mean a field where the set of the field is finite, i.e. the set comprises a finite number of elements. The finite field could, e.g., be Zₚ which is the field consisting of the integers modulo a prime number p, and where the arithmetic operations (addition, subtraction, etc.) are the usual integer operations modulo the prime p.

Accordingly, by converting the sharing of the derived key in the manner described above, it is ensured that the resulting converted sharing of the key can be used for performing digital signatures for the given digital signature scheme being associated with the finite field using efficient multiparty signature protocols with high performance, e.g., in terms of required processing power and/or low network bandwidth and latency.

Finally, a digital signature is performed by means of the converted shared key and using a signature protocol in accordance with the digital signature scheme. As described above, the conversion of the sharing of the derived shared key allows the signature to be performed in an efficient and high performing manner.

Thus, in the method according to the invention, the initial steps of generating the shared seed and deriving the derived shared key and the derived chain code from the shared seed may be performed by means of general multiparty protocols designed to compute complex unstructured functions, such as hash functions and HMAC-512, thereby ensuring that the shared seed, the derived shared key and the derived chain code are well protected against leaking and corruption. The price of this is that this part of the method may be slow and inefficient. However, this may be considered acceptable, since these steps may only need to be performed once or a few times, and the resulting derived shared key and derived chain code may be converted to keys and chain codes that form the basis of several keys to be used for performing digital signatures, e.g. on a one-time use basis.

Furthermore, there may be no or only few requirements on the protocols being applied for these initial steps, thereby allowing a wide variety of protocols, e.g. almost any generally available multiparty computation protocol, to be used. This renders this part of the method essentially 'plug-and-play 'and allows it to be implemented in a wide variety of existing digital signature systems.

On the other hand, the final step of performing the digital signature is performed in an efficient and high performing manner, using multiparty protocols specialized for computing digital signatures, but which are not capable of deriving keys. Accordingly, the method according to the invention strikes a suitable balance between using general multiparty computation protocols, in particular with regard to the shared seed, the shared derived key and the derived chain code, and obtaining high performance using specialized multiparty protocols when computing the digital signature based on a derived key.

The derived chain code may be a shared chain code which is shared among the two or more nodes. According to this embodiment, not only the derived key, but also the derived chain code, is shared among the two or more nodes, e.g. in the manner described above with reference to the shared seed. As an alternative, the derived chain code may be stored in its entirety, e.g. at each of the two or more nodes.

The step of converting the sharing of the derived shared key may further comprise converting the derived chain code. According to this embodiment, not only the sharing of the derived shared key, but also the derived chain code, is converted. This is particularly relevant in the case that the derived chain code is shared among the two or more nodes. In this case the derived chain code may be converted by converting the sharing of the derived chain code in the same manner as the sharing of the derived shared key is converted, or the derived chain code may be converted by converting it from a secret sharing to a form where it is known by all nodes.

The step of deriving a derived shared key and a derived chain code may comprise the steps of:
- deriving a first derived shared key and a first derived chain code from the shared seed, the first derived shared key being shared among the two or more nodes, and
- deriving at least one further derived shared key and at least one further derived chain code from the first derived shared key and the first derived chain code, the at least one further derived shared key being shared among the two or more nodes.

According to this embodiment, the step of deriving the derived shared key and the derived chain code includes at least two iterative steps. Initially, a first derived shared key and a first derived chain code are derived directly from the shared seed. In the next step, a further derived shared key and a further derived chain code are derived from the first derived shared key and the first derived chain code. Accordingly, the further derived shared key and the further derived chain code are not derived directly from the shared seed, but instead from the shared key and the chain code which were initially derived from the shared seed. The first derived shared key and the first derived chain code may be referred to as a master shared key and a master chain code, respectively.

In a further step, another further derived shared key and another further derived chain code may be derived from the further derived shared key and the further derived chain code, etc., until a final further derived shared key and a final derived chain code have been obtained, after a desired or predefined number of deriving steps.

Thus, the step of deriving at least one further derived shared key and at least one further derived chain code may comprise iteratively deriving shared keys and chain codes from the shared key and chain code from the previous iteration.

As an example, the seed may be a BIP32 seed, and shares of two keys and their corresponding chain codes may initially be derived from the shared seed, the derivation being performed according to the two BIP32 chain paths m/44'/0'/7' and m/44'/0'/8', respectively. The derivation of the two shared keys will each require three iterations of the hardened BIP32 derivation, each iteration involving computing the HMAC-SHA512 function on the previous intermediate shared key, using general multiparty computation. The two resulting derived shared keys will, according to the BIP44 standard, correspond to two Bitcoin wallet accounts. Once derived, the two derived account key sharings and their corresponding chain codes may then be converted. The derivation and conversion may be slow, since it requires computing the HMAC-SHA512 function using general multiparty computation. But once the two shared keys and their chain codes are derived and converted, it is possible to efficiently obtain a large number of signing keys from each of the shared derived account, on a one-time use basis, using non-hardened BIP32 derivation. For example it is possible to efficiently derive the shared keys m/44'/0'/7'/0/1 and m/44'/0'/7'/0/2 from the shared account key m/44'/0'/7'. The non-hardened BIP32 derivation does not involve complex hash functions or HMAC-SHA512 on shared keys, and can hence efficiently be performed on the on the secret shares of the converted account keys. The resulting two shared keys, m/44'/0'/7'/0/1 and m/44'/0'/7'/0/2, can then be used to sign Bitcoin transactions using an efficient multiparty protocol designed specifically to compute digital signatures.

The method may further comprise the step of, for each iteration generating a zero-knowledge proof for verifying the derived shared key. According to this embodiment, it is possible to verify, for each of the iteration steps, that the resulting derived shared key is in fact originating from the shared seed, and that it has been correctly derived. Details regarding zero-knowledge proofs will be described in further detail below.

As an alternative to the iterative process described above, the step of deriving a derived shared key and a derived chain code may comprise only a single step in which the derived shared key which is subsequently subject to the conversion step is derived directly from the shared seed.

The converted shared key may be shared among the two or more nodes by means of a type of sharing which differs from a type of sharing applied for sharing the derived shared key among the two or more nodes. According to this embodiment, the conversion of the sharing of the derived shared key changes the type of sharing applied for sharing the derived shared key among the two or more nodes. Accordingly, prior to the conversion step, the derived shared key is shared among the two or more nodes by means of a sharing which is not a sharing over the finite field described above. For instance, the sharing of the derived shared key, prior to the conversion step, may be an xor-sharing of bits, i.e., a sharing over a finite field of characteristic two, i.e., over the finite field GF(2^{k}) for some integer k, and the sharing may be authenticated by information theoretic message authentication codes. This means that the sharing prior to the conversion is more suitable for general multiparty computation protocols that operate on bits, and which are more suited for computing key derivation that involves many bit operations such as computing the function HMAC-SHA512 on the shared seed or a shared derived key.

Deriving a secret signing key from a seed and deriving further derived child secret keys from parent keys usually involves computing functions on the secret key that consist of many bit operations. For example, in Bitcoin the BIP32 derivation scheme requires us to compute the HMAC-SHA512 function on the seed as well as on the secret key when we derive. To be able to compute such functions on a shared seed or a shared secret key securely, without creating a single point of trust, we need to use general multiparty computation protocols that are designed to work on Boolean circuits. Such Boolean-based general multiparty computation protocols are capable of computing any function expressed as a Boolean circuit.

When using general multiparty computation protocols designed for Boolean circuits, we need to use a kind of secret sharing where the shares can be efficiently recombined and validated using bit operations. Hence, the sharing we use for the seed and the derived keys prior to the conversion are sharings that can be recombined and validated efficiently using bit operations. For instance, the sharing of the derived shared key, prior to the conversion step, may be an xor-sharing of bits, i.e. a sharing over a finite field of characteristic two, i.e. over the finite field GF(2^{k}) for some integer k, and the sharing may be authenticated by information theoretic message authentication codes.

On the other hand, when we want to efficiently compute a digital signature from a derived key, we must use specialized multiparty protocols. Such protocols are generally designed to work on sharings over a large finite field, namely the finite field defined by the digital signature scheme for which they generate signatures; and they often require that the sharing of the secret signing key is authenticated not by information theoretic message authentication codes, but, e.g., by a Feldman commitment to the secret signing key. Thus, the sharing of the derived secret signing key after conversion is, according to the invention, usually a sharing over the finite field defined by the digital signature scheme, and using a Feldman or Pedersen commitment to the secret signing key, such that the specialized multiparty computation protocol can operate on the secret sharing.

The shared seed and the shared derived key may be stored at the two or more nodes as authenticated secret sharings, such as authenticated secret sharings of bit vectors. According to this embodiment, the deriving process or the converting process may be allowed to abort in the case that one or more of the two or more nodes is malicious and has changed its share of the shared seed or the derived shared key prior to the deriving or converting step, respectively.

The shared seed and the shared derived key may be stored at the two or more nodes by means of sharings which are suitable for general secure multiparty computation protocols, such as general secure Boolean-based multiparty computation protocols, i.e. protocols that evaluate general Boolean circuits. According to this embodiment, the initial steps of generating the shared seed and deriving the derived shared key and the derived chain code may be performed by means of a secure (Boolean-based) multiparty computation protocol which is selected from a variety of generally known and available protocols. This renders this part of the method essentially 'plug-and-play' and allows it to be implemented in a wide variety of existing digital signature systems, as described above.

General multiparty computation protocols may, e.g., be interactive protocols that can be used to compute any function on input that is secret shared. The general multiparty computation may be designed to compute functions which are expressed as Boolean circuits, i.e., consisting of logical bit operations, such as AND, OR, and NOT. Such protocols are well-suited at computing functions such as HMAC-SHA512 which naturally consists of many bit operations. While they can in principle compute any function, they are not well suited for functions that involve many arithmetic operations in a larger field, such as the finite field Zₚ where p is a large prime. This is because each individual arithmetic operation, such as addition or subtraction, must then first be converted to Boolean operations, and this process incurs a large computational overhead.

The shared seed and the shared derived key may be stored at the two or more nodes by means of secret sharings based on information theoretic message authentication codes. In the present context the term 'information theoretic message authentication codes' (information theoretic MACs) should be interpreted to mean message authentication codes that protect the integrity (aka authenticity) of data even in a situation where the attacker trying to break the integrity has unbounded computational power.

Information theoretic MACs are, thus, known to provide a high level of security in the form of data integrity. Moreover, information theoretic MACs can be implemented using a relatively small number of Boolean operations. Thus, according to this embodiment, it is efficiently ensured that the authenticity of sharings which are authenticated by information theoretic MACs, i.e. the sharings of the seed and the derived shared key, respectively, are well protected against attacks from malicious or corrupted parties, and that the authenticity of the sharings can be efficiently validated in Boolean-based multiparty computation protocols. This is particularly relevant, since the shared seed and the higher levels of the derived shared key may remain valid for a long period of time, potentially several years. It is therefore important that these sharings remain uncompromised, in order to ensure that subsequently derived and/or converted shared keys can be trusted.

For a bit vector message m, and a MAC key=(a,b), where a and b are also two bit vectors, an information theoretic MAC code on a bit vector, m, may be computed as: c = MAC(m,k) = a.C(m)+b. Here multiplication means bit-wise AND and + means bit-wise xor, and C is a linear error correction code with dimension equal to the bit size of m and the code having minimal distance d. The message can later be validated by someone holding the MAC key k=(a,b) by checking that c=MAC(m,k). Intuitively, if an attacker tries to flip any bits in the message, i.e., replacing (m,c) with (m',c') where in particular m' ≠ m, then due to the error correcting code having minimal distance d, it means that the bit vector C(m') will differ from C(m) in at least d positions. And since the attacker does not know the two random bit vectors a and b of the MAC key, this means that in order to make the MAC check succeed, the attacker must be able to correctly guess d entries of the bit vectors a and b. This happens only with probability at most 1/2^{d} and hence by using a linear code with minimum distance at least, e.g., 128 bits, we ensure that no attacker can change the message, except with negligible probability.

Examples of error correcting codes include, but are not limited to, Reed-Solomon Codes, Reed-Muller Codes and BCH Codes.

A secret sharing may be validated (aka authenticated) using information theoretic MACs by having each node holding not only his own share, but also a MAC code on his own share as well as MAC keys on each of the other nodes's shares. Then, as part of a multiparty computation, each node inputs its share as well as its MAC code and all the MAC keys. In the multiparty computation the MAC keys are used to validate all the MAC codes on all the shares, and the computation aborts if any MAC validation failed. If all MAC checks succeeded, the sharing is known to be valid (aka authentic).

As an alternative, a secret sharing may be validated as follows. First each party of a multiparty computation generates a share of an information theoretic MAC key, and the parties compute via multiparty computation the combined MAC key and use the key to compute the MAC code of the secret, and providing as output of the multiparty computation to each party a share of the MAC code. Later, the MAC code can be validated by each party inputting its shares of the MAC code and MAC key to a multiparty computation which combines the shares and validates the MAC code and aborts if it is not valid.

Validating a sharing like this, using information theoretic MACs, can be done efficiently in Boolean-based multiparty computation since computing the MAC checks only involves a small number of Boolean operations.

The converted shared key may be stored at the two or more nodes as an additive sharing. According to this embodiment, the sharing over the finite field, which results from the conversion, is an additive sharing. In the present context the term 'additive sharing' should be interpreted to mean that the sum of the shares over the given field is the secret. An additive sharing is useful because it means that an attacker must steal all shares in order to learn any information about the secret.

The step of converting the sharing of the derived shared key may comprise converting the shares of the derived shared key, and the converted key shares may include a Feldman commitment or a Pedersen commitment of the derived shared key. According to this embodiment, a converted share may include the Feldman commitment k·G of the derived key, where k is the derived key and G is a generator for some group in which the discrete log problem is believed to be hard. If so, the Feldman commitment hides the derived key from each node (who only sees k·G), but at the same time, it binds the value of the key, meaning that it determines the value of the key, and it is possible to use the commitment to later validate that some value is in fact the key. In another embodiment, a Pedersen commitment k·G + r·H is used, where k is the derived key, r is a random value, and G and H are generators for a group where computing the discrete logarithm is assumed to be hard. This commitment has similar properties to the Feldman commitment, except that it is perfectly hiding k and only computationally binding, whereas the Feldman commitment is perfectly binding and only computationally hiding. The group for which G is a generator will often be the group associated with the digital signature scheme, for example, for ECDSA signatures over the elliptic curve secp256k1, G will be the generator point on the elliptic curve as specified by secp256k1.

The step of converting the sharing of the derived shared key may be performed by means of a secure multiparty computation protocol designed for an honest majority scheme or a dishonest majority scheme. According to this embodiment, the two or more nodes cooperate in performing the conversion of the sharing of the derived shared key by means of secure multiparty computation. Accordingly, none of the two or more nodes is able to perform the conversion on their own. Instead, a certain set of two or more of the nodes need to participate in performing the conversion. The participation of all of the nodes may be required, or only a subset of the nodes.

The secure multiparty protocol applied for this purpose is of a kind which is designed to be secure against an adversary that corrupts an honest majority or a dishonest majority of the nodes. Secure multiparty protocols that are designed to be secure even when a majority of the participants are corrupted often rely on significantly more complicated cryptography and are thus less efficient, but they provide security when a majority, sometimes even if all but one, of the participant are corrupted. On the other hand, protocols designed for an honest majority are simpler and more efficient, but they are only secure if up to half of the participants are corrupted. If more corruptions occur, they break down and the secret seed and/or secret keys may be revealed to the attacker.

The step of deriving a derived shared key and a derived chain code may comprise the steps of:
- converting the sharing of the shared seed into a sharing with lower security,
- deriving the derived shared key and the derived chain code from the sharing of the seed with lower security, and
- converting the sharing of the derived shared key into a sharing with higher security.

According to this embodiment, the sharing of the shared seed is of a kind having a high level of security. Accordingly, it is difficult to compromise the shared seed, even though it may be expected that the shared seed may be stored for a long period of time, potentially several years. It may, e.g., be a sharing that protects the secret even if a majority of shares are leaked to an adversary.

However, when the step of deriving the derived shared key and the derived chain code is to be performed, the sharing of the shared seed is converted into a sharing with a lower security. Such a sharing with a lower security will allow the deriving step to be performed faster and more efficiently than the sharing with the high security. Accordingly, the step of deriving the derived shared key and the derived chain code, which is subsequently performed, while the shared seed is shared with the sharing of the lower security level, is performed with high performance. For example, the sharing with lower security may be a sharing with a decreased security threshold, meaning that it is a sharing that only hides the secret seed if a minority of shares are leaked to an adversary.

Once the deriving step has been performed, the sharing of the derived shared key is converted into a sharing with higher security. Furthermore, the sharing of the shared seed is also converted back to a sharing with a higher security.

Thus, according to this embodiment, the sharings which may be expected to be kept and valid for a long time period, i.e. the shared seed and the derived shared key, are stored at the two or more nodes by means of a sharing with a high level of security. Accordingly, it is difficult to compromise these stored shared items, even though a malicious party may have plenty of time to attempt this. On the other hand, for the short period of time where the derived shared key and the derived chain code are derived from the shared seed, the high security sharings are converted into sharings of lower security, in order to allow for fast and efficient derivation, e.g., using a multiparty computation protocol designed for an honest majority of participants. This may be considered acceptable due to the limited time window in which the actual derivation takes place. Accordingly, an appropriate balance is obtained between security and performance.

Similarly, the step of converting the sharing of the derived shared key may comprise the steps of:
- converting the sharing of the derived shared key into a sharing with lower security,
- converting the sharing of the derived shared key with lower security into a converted sharing over a large finite field, and
- converting the converted sharing of the converted shared key into a sharing with a higher security.

This is very similar to the embodiment described above regarding conversion of the sharing of the shared seed, and the remarks set forth in this regard are equally applicable here.

However, in this case the high security sharing of the derived shared key is temporarily converted into a sharing with lower security in order to allow for fast and efficient conversion of the derived shared key into the converted key to be applied for performing the digital signature. In particular, the sharing of the derived shared key is, in a similar manner to the embodiment described above, converted back to the sharing with high security once the conversion has been completed.

The step of converting the sharing of the derived shared key may comprise the steps of:
- the two or more nodes computing an additive integer sharing of the derived shared key, using an honest majority general multiparty computation protocol, and revealing a subset of the integer shares of the additive integer sharing to each of the two or more nodes, such that the shares together form a replicated integer sharing of the derived shared key,
- the two or more nodes each performing local, non-interactive computation to convert their respective integer shares into shares modulo p, where p is an integer, the two or more nodes thereby obtaining a secret sharing of the derived key modulo p, and
- the two or more nodes running a specialized secure multiparty computation protocol based on their respective converted integer shares, so as to compute and reveal k·G, where G is a generator of the finite field and k is the derived shared key.

According to this embodiment, the step of converting the sharing of the derived shared key is performed by the two or more nodes in cooperation applying a secure multiparty protocol designed for an honest majority scheme in the following manner.

Initially, the two or more nodes compute an additive integer sharing of the derived shared key, using an honest majority general multiparty computation protocol. Accordingly, this part of the step is performed by means of a generally applied and readily available multiparty computation protocol. A subset of the integer shares of the additive integer sharing are revealed to each of the two or more nodes, such that the shares together form a replicated integer sharing of the derived shared key.

A replicated secret sharing of a derived secret shared key (k) is formed by expressing the shared secret key as a sum of numbers k = k₁ + k₂ + ... + kₘ and by distributing the individual numbers (kᵢ) among the two or more nodes, such that each node holds some of the numbers, but not all. The numbers can, e.g., be distributed in such a way that no single node holds all the numbers required to compute the sum, i.e., the key k, thus hiding k from any single node, but such that any subset of nodes of a certain threshold size together hold all the numbers and can thus together compute the key. As a simple example, suppose that k = k₁ + k₂ + k₃. Then we can form a replicated sharing consisting of the three shares s₁=(k₂,k₃), s₂=(k₁,k₂), and s₃=(k₁,k₃). If the numbers are plain integers, it is called a replicated integer secret sharing, but it may also be elements in a finite field, and then the sum is computed in the field.

Next, the two or more nodes each perform local, non-interactive computation to convert their respective integer shares into integer shares modulo p, where p is an integer, e.g. a prime. This could, e.g., be done by each node locally reducing each of its shares modulo p. For instance, p may be the prime defined by the applied signature scheme. Since the integer sharing is additive, the two or more nodes thereby obtain a replicated secret sharing of the derived key modulo p. Since this part of the step is performed by means of local and non-interactive computation, no interaction between the nodes is required, and therefore the computation can be performed efficiently and fast, and with no regard to the available communication bandwidth among the two or more nodes.

Finally, the two or more nodes run a specialized, or non-general, secure multiparty computation protocol, e.g. an honest majority secure multiparty computation protocol, based on their respective converted/replicated integer shares of k modulo p, so as to compute and reveal k·G, where G is a generator of the finite field and k is the derived shared key. Due to the specialized secure multiparty computation protocol applied in this part of the step, this computation may be performed fast and efficiently. G may, e.g., be a generator of a finite group, e.g. a subgroup of an elliptic curve of an ECDSA signature scheme.

In this protocol every node reveals to all other nodes the Feldman commitments kᵢ·G where kᵢ are the integers modulo p contained in that node's replicated share. Due to the sharing being replicated, each node will receive at least two identical Feldman commitments of each share, and it will abort if they do not match. If all expected Feldman commitments of each share match, each node will add the commitment of each share, in order to obtain a Feldman commitment. Assuming that a majority of the nodes are honest, and if the protocol did not abort above, then the product will equal the derived key k·G = k₁·G + k₂·G + ... + kₘ·G. Each node will use as its converted share its replicated share modulo p together with the Feldman commitment k·G of the derived key. The Feldman commitment is suitable as an authenticator for the sharing, when it is later used to compute digital signatures, using a specialized multiparty computation protocol.

A benefit of this embodiment is that the conversion of the sharing of the derived key k is done without having to compute from shares of k the value k·G using general (Boolean) multiparty computation, which is possible, but very inefficient.

As an alternative, the step of converting the sharing of the derived shared key may comprise the steps of:
- using a dishonest majority general multiparty computation protocol, the two or more nodes computing additive shares (k₁, k₂, ..., kₙ), in the finite field, of the derived shared key (k),
- using the dishonest majority general multiparty computation protocol, each node (Nᵢ) generating, for each of the other nodes (Nⱼ), an information theoretic message authentication key (K_{i,j}=(a_{i,j},b_{i,j})) and computing a corresponding message authentication code (M_{i,j}=a_{i,j}·kᵢ+b_{i,j}), over the finite field, of the node's (Nᵢ) additive share (kᵢ) of the derived shared key, where a_{i,j} and b_{i,j} are random elements of the finite field, and where the general multiparty computation protocol reveals, to each of the nodes (Nᵢ) its additive share (kᵢ) of the derived shared key and the respective message authentication codes (M_{j,i}) related to the node (Nᵢ),
- each node (Nᵢ) broadcasting a Feldman commitment (kᵢ·G) of its additive share (kᵢ) of the derived shared key, where G is a generator related to the finite field, and sending to each of the other nodes (Nⱼ) a Feldman commitment (M_{i,j}·G) to the respective message authentication code (M_{i,j}),
- each node (Nᵢ), for each of the other nodes (Nⱼ), checking the received Feldman commitment (kⱼ·G) by checking that M_{j,i}·G = a_{j,i}·(kⱼ·G) + b_{j,i}·G, and aborting the protocol if this is not the case, and
- each node (Nᵢ) computing the product of the Feldman commitments of the additive shares of the derived shared keys (K=k₁·G + k₂·G + ... + kₙ·G), and each node (Nᵢ) outputting a converted share (K, kᵢ).

According to this embodiment, the step of converting the sharing of the derived shared key is performed by the two or more nodes in cooperation applying a secure multiparty protocol designed for a dishonest majority scheme in the following manner.

Initially, the two or more nodes compute additive shares (k₁, k₂, ..., kₙ), over the finite field Zₚ, of the derived shared key (k), using a dishonest majority multiparty computation protocol. It should be noted that, in the present context, 'n' denotes the number of nodes. Accordingly, similarly to the embodiment described above, this part of the step is performed by means of a generally applied and readily available multiparty computation protocol.

Next, also using the dishonest majority general multiparty computation protocol, the nodes jointly generate, for each node (Nᵢ), a number of values namely, for each of the other nodes (Nⱼ), an information theoretic message authentication key (K_{i,j}=(a_{i,j},b_{i,j})) and computes a corresponding message authentication code (M_{i,j}=a_{i,j}·kᵢ+b_{i,j}), where kᵢ is the node's (Nᵢ) additive share of the derived shared key and a_{i,j} and b_{i,j} are random elements of the finite field defined by the signature scheme.

Thus, in the case that there are n nodes, the nodes jointly generate, using the dishonest majority general multiparty computation protocol, for each of the nodes n-1 information theoretic message authentication keys and n-1 message authentication codes, i.e. one information theoretic message authentication key and one message authentication code for each of the n-1 other nodes. For instance, in the case that there are 3 nodes, node N₁ generates K_{1,2} and M_{1,2} for node N₂, and K_{1,3} and M_{1,3} for node N₃. Node N₂ generates K_{2,1} and M_{2,1} for node N₁, and K_{2,3} and M_{2,3} for node N₃. Finally, node N₃ generates K_{3,1} and M_{3,1} for node N₁, and K_{3,2} and M_{3,2} for node N₂.

The general multiparty computation protocol reveals, to each of the nodes (Nᵢ) its additive share (kᵢ) of the derived shared key and the respective message authentication codes (M_{j,i}) related to the node (Nᵢ). Thus, in the example with 3 nodes described above, k₁, M_{2,1} and M_{3,1} will be revealed to node N₁, k₂, M_{1,2} and M_{3,2} will be revealed to node N₂, and k₃, M_{1,3} and M_{2,3} will be revealed to node N₃.

Next, each node (Nᵢ) broadcasts a Feldman commitment (kᵢ·G) of its additive share (kᵢ) of the derived shared key, where G is a generator related to the finite field. For instance, G may be a generator of a subgroup of an elliptic curve group of the digital signature scheme related to the finite field.

Furthermore, each node (Nᵢ) sends, to each of the other nodes (Nⱼ) a Feldman commitment (M_{i,j}·G) to the respective message authentication code (M_{i,j}). Thus, each of the nodes (Nᵢ) is now in the possession of Feldman commitments of the additive shares of all of the other nodes, as well as Feldman commitments to all of the message authentication codes which were previously received from the other nodes.

Next, each node (Nᵢ), for each of the other nodes (Nⱼ), checks the received Feldman commitment (kⱼ·G). Accordingly, in the case that there are n nodes, each node performs n-1 checks, i.e. one for each of the n-1 other nodes. Each check is performed by checking that M_{j,i}·G = a_{j,i}·(kⱼ·G) + b_{j,i}·G, i.e., the node uses the information theoretic MAC code key (a_{j,i}, b_{j,i}) to check that the share kⱼ is valid, in the exponent, without learning any other information about the share kⱼ. If the MAC check succeeds, then the respective nodes can confirm that the additive shares (kⱼ) held by the other nodes (Nⱼ) are correct, and that they have not been compromised. On the other hand, if it is revealed that, for at least one node (Nⱼ), M_{j,i}·G * a_{j,i}·(kⱼ·G) + b_{j,i}·G, then at least one of the nodes and/or at least one of the key shares may have been compromised. Accordingly, in this case the protocol is aborted.

Finally, each node (Nᵢ) that does not abort, computes the product of the Feldman commitments of the additive shares of the derived shared keys (K = k₁·G + k₂·G + ... + kₙ·G), and outputs a converted share (K,kᵢ). The converted shares (K,kᵢ) of the respective nodes then constitute the shares of the converted shared key.

As in the previous embodiment, it is a benefit of this embodiment that the conversion of the sharing of the derived key k does not require computing from shares of k the value k·G using general (Boolean) multiparty computation which would be very inefficient.

The step of converting the sharing of the derived shared key may comprise revealing the derived chain code to each of the two or more nodes. According to this embodiment, the chain code is kept secret up until the converting step, where it is revealed to each of the two or more nodes, or 'opened'. This minimises the risk of the chain code being compromised until the point in time where the converting step is being performed, while allowing the converting step to be performed fast and efficiently. In the case where derivation contains several intermediate derivation steps, as in the BIP32 example above, this means that the chain codes corresponding to the top levels m/44' and m/44'/0 may remain protected by secret sharing and never revealed to any single party, whereas the chain code corresponding to the account keys m/44'/0'/0' and m/44'/0'/1' are revealed to each node as part of the conversion. This may be acceptable since the top-level chain codes are generally considered more sensitive than the lower account-level chain codes.

The method may further comprise the steps of the two or more nodes generating an object from the shared seed and providing the generated object to a third party holding a commitment to the shared seed.

According to this embodiment, an object is generated from the shared seed, by the two or more nodes in cooperation. This could, e.g., include the two or more nodes applying a secure multiparty computation protocol based on their shares of the shared seed. The generated object is provided to a third party holding a commitment to the shared seed. Accordingly, the third party will be able to verify that the object is indeed correctly generated from the shared seed.

The method may further comprise the step of verifying the generated object by means of a zero-knowledge proof and using a zero-knowledge argument system, wherein:
- the two or more nodes, using their respective shares of the shared seed, collectively act as a prover in the zero-knowledge argument system,
- the third party acts as verifier in the zero-knowledge argument system, and
- a statement being proved by the zero-knowledge proof is a statement convincing the verifier that the seed shared by the two or more nodes is the same seed as the seed being defined by the seed commitment held by the verifier as well as the same seed being used for generating the object.

According to this embodiment, the third party verifies the correctness of the object by means of a zero-knowledge proof. To this end a zero-knowledge argument system is used. A zero-knowledge argument system normally includes a prover, a verifier and a statement being proved, the statement being on the form f(x,w)=y, where f is a function, x is some public input known by both the prover and the verifier, y is either 1 or 0 (signifying either "true" or "false"), and w is a witness only known by the prover. If the verifier can prove the statement, this will convince the verifier that the prover is in the possession of a witness w that together with x makes the function f output "true". The proof is performed as a zero-knowledge proof, i.e. the process of the prover convincing the verifier can be done without the need for the prover to reveal the actual witness w to the verifier.

In the zero-knowledge argument system applied in the present embodiment, the two or more nodes, using their respective shares of the shared seed, collectively act as the prover, and the third party acts as the verifier. In addition, x includes both the commitment to the seed and the generated object, and the witness is the shared seed itself, and the statement being proved, f(x,w)=1, is a statement convincing the verifier that the seed shared by the two or more nodes is the same seed as the seed being defined by the seed commitment held by the verifier as well as the same seed being used for generating the object.

Thus, when the verifier, in the form of the third party, proves the statement, the verifier is convinced that the generated object was in fact correctly derived from the shared seed by the nodes. Furthermore, by virtue of the zero-knowledge property of the argument system, this is obtained without revealing the shared seed, or any of the shares of the shared seed, to the verifier.

The zero-knowledge argument system may be a non-interactive argument system, and the step of verifying the generated object may comprise the steps of:
- the two or more nodes, using their respective shares of the shared seed, generating a single proof string,
- revealing the single proof string to the verifier, and
- the verifier verifying the single proof string without communication with the two or more nodes.

According to this embodiment, the zero-knowledge proof is performed by the prover (i.e., in this embodiment, the nodes) generating a proof which is a bit string, and the verifier receiving the bit string and verifying the proof offline, i.e. by inspecting the bit string without requiring communication or interaction with other parties, notably without requiring communication or interaction with any of the two or more nodes. The allows the verification of the zero-knowledge proof to be performed fast and efficiently, and without any requirements to communication bandwidth to and from the verifier.

The method may further comprise the step of the two or more nodes agreeing on a chain path, i.e. a sequence of integers defining a sequence of key derivations from the initial seed, and the generated object may be a public part of the derived shared key according to the chain path, and the step of verifying the generated object may comprise the verifier verifying that the public part of the derived shared key is correctly derived from the shared seed, using the commitment to the shared seed and the chain path.

According to this embodiment, the object being generated by the two or more nodes from the shared seed is in the form of a public part of the derived shared key, according to a chain path agreed upon by the two or more nodes. For instance, in case of ECDSA signatures, the secret derived key may be an element k in the finite field Zₚ and the corresponding public key may be k·G where G is a generator for a subgroup of prime order p on the elliptic curve secp256k1. When the statement is verified by the verifier, it is accordingly verified that the public part of the derived shared key, k·G, and thereby the derived shared key as such, has been correctly derived from the shared seed by the nodes. Thus, the correctness and trustworthiness of the derived shared key is essentially verified, meaning that the verifier then is assured that the derived object, k·G, is correctly derived from the same seed as the seed to which he holds a seed commitment.

As an alternative, the generated object may be an encryption of the shared seed under an encryption key, ek, and the step of verifying the generated object may comprise the verifier verifying that the encryption of the shared seed is a correct encryption under ek, using as public information the encryption key, ek, and the commitment to the shared seed.

According to this embodiment, the object being generated by the two or more nodes and provided to the verifier is an encrypted version of the shared seed, and the verifier verifies the correctness and trustworthiness of this encrypted version. This may, e.g., be relevant in the case that it is desired to create an encrypted backup of the shared seed, the encrypted backup being encrypted under the encryption key, ek. In this case it is relevant to ensure that the encrypted backup of the shared seed is correct and uncorrupted, because otherwise it will not be possible to later recover the shared seed from the encrypted backup, using the corresponding decryption key, dk, in case this is required. The encryption key, ek, may, e.g., be provided to the two or more nodes by the verifier. The applied encryption scheme may, e.g., be an RSA encryption scheme or a similar public-key encryption scheme.

The commitment to the shared seed may be implemented using a hash function or a message authentication code (MAC) of the shared seed. For example, the seed commitment, C, may be a SHA2 or SHA3 hash of the seed, or it may be the HMAC-SHA512 function of the seed, using some fixed key, or it may be any other suitable kind of commitment.

As an alternative, the commitment to the shared seed may include a chain path and a public key derived from the shared seed, and/or a cryptocurrency address derived from the public part of a derived key derived from the seed, using the chain path. According to this embodiment, the seed commitment includes a derived public key, or a cryptocurrency address derived from such a derived public key. The advantage of this is that the derived key or the derived address can exist on a blockchain, e.g. the Bitcoin blockchain. This means that the verifier does not need to keep the seed commitment safe, but can instead read the seed commitment directly from the blockchain when he needs to verify the derived object obtained from the nodes. The integrity of the seed commitment will then be protected by the strong integrity and availability mechanisms applied by the blockchain. Furthermore, the verifier will at the same time be able to verify that there exist available funds associated with the given public key or address as part of verifying the generated object.

The method may further comprise the step of the two or more nodes generating the commitment to the shared seed and providing the generated commitment to the verifier. As an alternative, the two or more nodes and the verifier may generate the commitment in cooperation or the commitment may initially be generated by a trusted third party.

### BRIEF DESCRIPTION OF THE DRAWINGS

The invention will now be described in further detail with reference to the accompanying drawings in which
Fig. 1 illustrates hierarchical key derivation in accordance with a method according to an embodiment of the invention,
Fig. 2 illustrates key derivation by two nodes in cooperation, using a method according to an embodiment of the invention,
Fig. 3 illustrates verification of a derived shared key in accordance with a method according to an embodiment of the invention,
Fig. 4 illustrates verification of an encrypted version of a shared seed in accordance with a method according to an embodiment of the invention,
Fig. 5 illustrates conversion of a derived shared key using an honest majority protocol, in accordance with a method according to an embodiment of the invention, and
Fig. 6 illustrates conversion of a derived shared key using a dishonest majority protocol, in accordance with a method according to an embodiment of the invention.

### DETAILED DESCRIPTION OF THE DRAWINGS

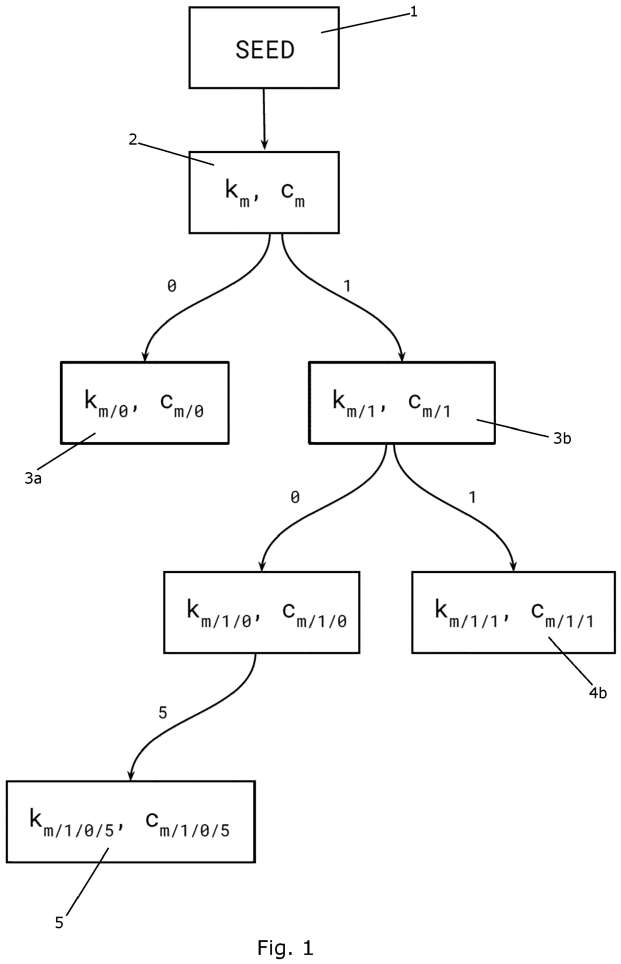

Fig. 1 illustrates hierarchical key derivation in accordance with a method according to an embodiment of the invention. A shared seed 1 is generated and shared among two or more nodes (not shown). Next, a first set 2 of a derived shared key and a chain code, in the form of a shared master key, kₘ, and a master chain code, cₘ, respectively, are derived from the shared seed 1, in a first iteration step. Similarly to the seed 1, the shared master key, kₘ, is shared among the two or more nodes.

In a second iteration step, one or more second sets 3 of derived shared keys, k_{m/0}, k_{m/1}, and derived chain codes, c_{m/0}, c_{m/1}, are derived from the shared master key, kₘ, and the master chain code, cₘ, each derived second chain code, c_{m/0}, c_{m/1}, corresponding to one of the second derived shared keys, k_{m/0}, k_{m/1}. Again, the second derived shared keys, k_{m/0}, k_{m/1}, are each shared among the two or more nodes. Fig. 1 shows two sets 3a, 3b of second derived shared keys with corresponding second chain codes, i.e. a first set 3a with derived shared key k_{m/0} and derived chain code c_{m/0}, and a second set 3b with derived shared key k_{m/1} and derived chain code c_{m/1}, respectively. However, it should be noted that only one set 3 of derived shared key and chain code, or three or more sets 3 of derived shared key and chain code may instead be derived.

Subsequently, further iteration steps may be performed, in which further derived sets of derived shared keys and derived chain codes are derived from the respective sets 3a, 3b of second derived shared keys and second derived chain codes. Fig. 1 illustrates that two sets 4a, 4b of derived shared keys, k_{m/1/0}, k_{m/1/1}, and derived chain codes, c_{m/1/0}, c_{m/1/1}, are derived from set 3b of the previous iteration step. It should be noted that similar sets of derived shared keys and derived chain codes may be derived from set 3a.

Furthermore, Fig. 1 illustrates yet another iteration step, in which a set 5 of a derived shared key, k_{m/1/0/5}, and a corresponding derived chain code, c_{m/1/0/5}, is derived from the set 4a of derived shared key, k_{m/1/0}, and derived chain code, c_{m/1/0}, of the previous iteration step.

Accordingly, the method illustrated in Fig. 1 allows for hierarchical, deterministic key derivation, in which keys and chain codes are iteratively derived as child keys and chain codes, respectively, from parent keys and chain codes, respectively, of a previous iteration step. This defines a tree of derived keys, as illustrated in Fig. 1.

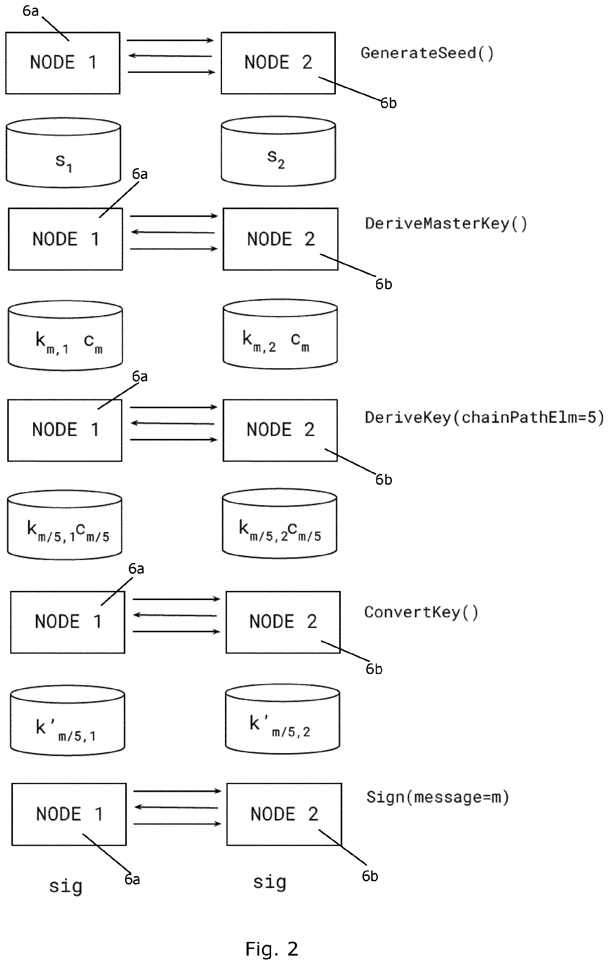

Fig. 2 illustrates key derivation by two nodes 6a, 6b in cooperation, using a method according to an embodiment of the invention. It should be noted that the process described below could be performed by three or more nodes 6 in cooperation, but for the sake of clarity only two nodes 6a, 6b are illustrated here.

In a first step, the two nodes 6a, 6b cooperate in generating a shared seed, using a multiparty computation protocol, GenerateSeed(). This results in each of the nodes 6a, 6b holding a share of the shared seed, while none of the nodes 6a, 6b knows or gains access to the entire seed. Accordingly, node 6a holds share s₁ and node 6b holds share s₂. In the example illustrated in Fig. 2, the shares, s₁ and s₂, are stored in respective local databases accessible by the respective nodes 6a, 6b. As an alternative, the shares s₁, s₂ may be held in local memory, stored on local disks, or held in any other suitable way by the respective nodes 6a, 6b.

Next, the two nodes 6a, 6b cooperate in deriving a shared master key and a master chain code from the shared seed, and using a multiparty computation protocol, DeriveMasterKey(). Accordingly, each of the nodes 6a, 6b apply their respective shares s₁, s₂ of the shared seed and engage in the multiparty computation protocol, DeriveMasterKey(). This results in a shared master key, kₘ, and a corresponding master chain code, cₘ. The shared master key, kₘ, is shared among the nodes 6a, 6b in a manner similar to the sharing of the shared seed, i.e. node 6a holds share k_{m,1} and node 6b holds share k_{m,2}, and none of the nodes 6a, 6b knows or gains access to the entire shared master key, kₘ. However, both nodes 6a, 6b obtain the master chain code, cₘ. It should be noted that, as an alternative, the master chain code, cₘ, may also be shared among the nodes 6a, 6b. In the example illustrated in Fig. 2, the respective shares k_{m,1}, k_{m,2} of the master key and the master chain code cₘ are stored in respective databases accessible by the respective nodes 6a, 6b, but could, alternatively, be stored in another suitable manner, as described above.

In a next step, the two nodes 6a, 6b agree on a chain element. In the example illustrated in Fig. 2, the chain element is designated "5". The two nodes 6a, 6b further engage in yet another multiparty computation protocol, DeriveKey(chainPathElm=5), in order to derive a derived shared key, k_{m/5}, and a derived chain code, c_{m/5}, from the shared master key, kₘ, and the master chain code, cₘ, and based on the chain element "5" agreed upon. The derived shared key, k_{m/5}, is shared among the two nodes 6a, 6b in a manner similar to the shared seed and the shared master key, i.e. node 6a holds share k_{m/5,1} and node 6b holds share k_{m/5,2}, and none of the nodes 6a, 6b knows or gains access to the entire derived key, k_{m/5}.

Further iterative steps may be performed in which shared keys and corresponding chain codes are derived from shared keys and chain codes of a previous iteration, essentially in the manner described above. However, in Fig. 2 such further steps are not illustrated for the sake of clarity.

In a next step, the two nodes 6a, 6b cooperate to convert the sharing of the shared derived key, k_{m/5}, into a converted sharing, k'_{m/5}, by means of a multiparty computation protocol, ConvertKey(). The result is that node 6a now holds share k'_{m/5,1} and node 6b holds share k'_{m/5,2}. The sharing, k_{m/5}, of the derived shared key prior to the conversion may, e.g., be a sharing over the finite field GF(2^{m}) of characteristic two, which is well suited for general multiparty computation of, e.g., HMAC-SHA-512 functions. However, the sharing, k'_{m/5}, of the derived shared key after the conversion is a sharing over the finite field Zₚ, which is the same field as used in a signature scheme which it is intended to use. Accordingly, this sharing is suitable for multiparty computation protocols designed specifically for computing digital signatures, such as ECDSA or Schnorr signatures. Such protocols are normally fast and efficient, and this will be described in further detail below.

Finally, the two nodes 6a, 6b agree on a message, m, to be signed, and engage in a specialized multiparty computation protocol, Sign(message=m), using the message, m, and their respective shares, k'_{m/5,1} and k'_{m/5,2}, of the converted sharing, k'_{m/5}, of the derived shared key, in order to compute a digital signature of the message.

Accordingly, the multiparty computation steps prior to the conversion can be performed using general multiparty computation protocols, which might by slow and/or inefficient, but which allow the method to be performed without imposing any particular restrictions on the choice of multiparty computation protocol. This renders this part of the method essentially'plug-and-play'. However, the signing step is performed by means of the converted sharing of the derived shared key, k'_{m/5}, which is suitable for use with the selected signature scheme using the finite field, Zₚ, and therefore this final step can be performed fast and efficiently, due to the conversion.

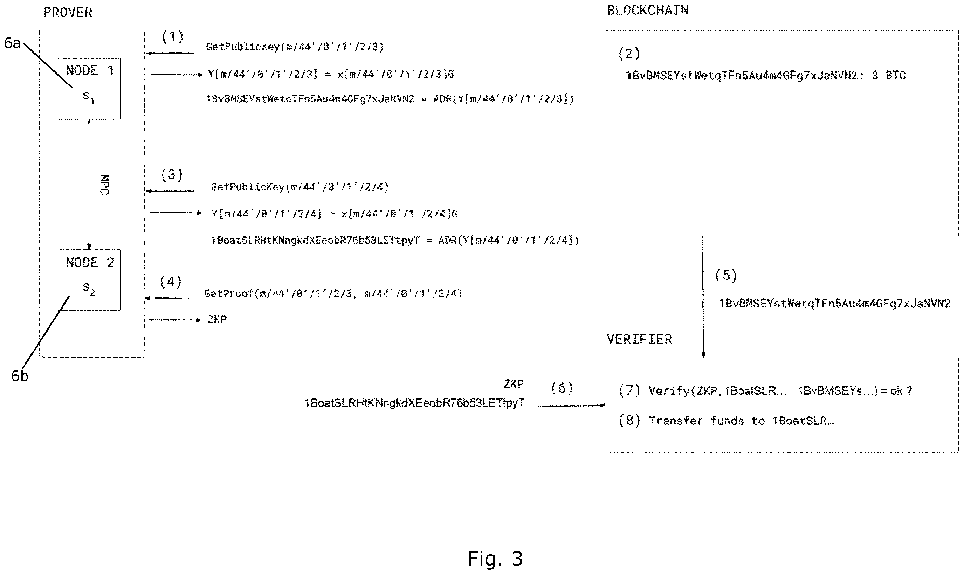

Fig. 3 illustrates verification of a derived shared key in accordance with a method according to an embodiment of the invention. More particularly, Fig. 3 illustrates an example of how the method according to the invention may be adapted to a Bitcoin setting.

Bitcoin settings usually apply ECDSA signature keys for transfer of funds. In this case, the public part of the ECDSA signature key is a point on the elliptic curve secp256k1. Given a public ECDSA key, a corresponding Bitcoin P2PKH address is computed by applying a sequence of hash functions on the public key, and finally base58-encoding the resulting bytes. In the following, this function is denoted ADR(Y), where Y=x·G is the public ECDSA key, and x is the corresponding private ECDSA key.

In the embodiment illustrated in Fig. 3, a seed is shared among two nodes 6a, 6b, e.g. in the manner described above with reference to Fig. 1 or Fig. 2. Accordingly, node 6a holds share s₁ of the seed and node 6b holds share s₂ of the seed. It should be noted that the seed may instead be shared among three or more nodes, but only two nodes are shown here for the sake of clarity.

In a first step, denoted (1) in Fig. 3, the two nodes 6a, 6b cooperate in generating a derived shared key, using a secure multiparty computation protocol, GetPublicKeyO, applying their respective shares s₁, s₂ of the shared seed, and according to a chain path, denoted m/44'/0'/1'/2/3. The nodes 6a, 6b further reveal the corresponding public key, Y. In a next step, denoted (2) in Fig. 3, the public key, Y, is converted to the corresponding Bitcoin address, and funds in the form of 3 BTC is transferred to that address.

Next, in a step denoted (3) in Fig. 3, the two nodes 6a, 6b cooperate in generating another derived shared key, using the multiparty computation protocol, GetPublicKeyO, and applying their respective shares s₁, s₂ of the shared seed. However, in this step the derived shared key is generated according to a different chain path, denoted m/44'/0'/1'/2/4, and the corresponding public key, Y, is revealed by the nodes 6a, 6b. Furthermore, the public key is converted into a corresponding Bitcoin address, similarly to the step denoted (2) described above.

Next, in a step denoted (4) in Fig. 3, the two nodes 6a, 6b cooperate in generating a non-interactive zero-knowledge proof, ZKP, using a multiparty computation protocol, GetProof(), applying their respective shares s₁, s₂ of the shared seed, and based on the two chain paths that were also applied in steps (1) and (3). The multiparty computation protocol, GetProof(), requires that the nodes 6a, 6b exchange a number of messages with each other over a secure channel. Accordingly, the nodes 6a, 6b collectively act as a prover, as will be described further below.

A verifier, in the form of a third party, inspects the blockchain, step (5) in Fig. 3, reads the first Bitcoin address, i.e. the Bitcoin address generated in step (2) and corresponding to the public key generated in step (1), and verifies that a certain amount of funds, i.e. 3 BTC, is available on the address. The verifier further receives, in step (6) in Fig. 3, the second Bitcoin address, i.e. the Bitcoin address generated in step (3) and corresponding to the second public key, also generated in step (3), and the zero-knowledge proof generated in step (4).

The verifier then, in a step denoted (7) in Fig. 3, verifies the non-interactive zero-knowledge proof to get convinced that the second Bitcoin address, i.e. the Bitcoin address generated in step (3), is derived from the same shared seed as the first Bitcoin address, i.e. the Bitcoin address generated in step (2), that both addresses have been properly derived, i.e. that they belong to the same wallet, and that the prover that generated the zero-knowledge proof, i.e. the two nodes 6a, 6b in cooperation, knows a sharing of this shared seed and is hence the owner of the funds in the wallet. This constitutes a proof statement.

Finally, in step (8), based on this knowledge, the verifier is now willing to transfer the funds from the first Bitcoin address to the second Bitcoin address.

Thus, the method illustrated in Fig. 3, represents a zero-knowledge argument system, wherein the two nodes 6a, 6b, using their respective shares s₁, s₂ of the shared seed, collectively act as a prover and the third party acts as a verifier. The verifier inspecting the blockchain and reading the first Bitcoin address constitutes seed commitment, and the second Bitcoin address provided to the verifier constitutes an object generated from the shared seed. The proof statement is the statement that is verified in the verification taking place in step (7).

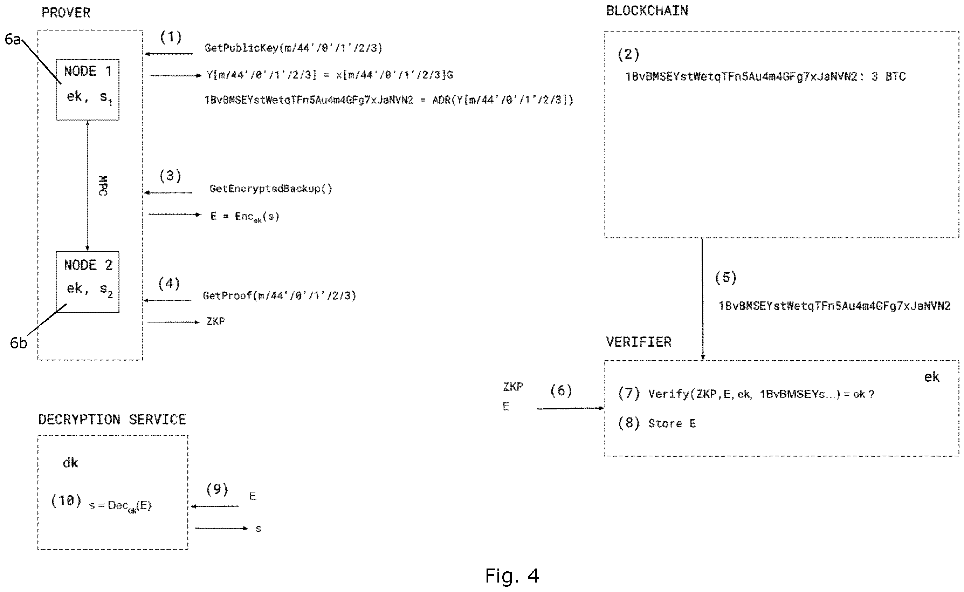

Fig. 4 illustrates verification of an encrypted version of a shared seed in accordance with a method according to an embodiment of the invention. More particularly, Fig. 4 illustrates how the method according to the invention may be adapted for providing verifiable backup in a Bitcoin setting. The method illustrated in Fig. 4 is similar to the method illustrated in Fig. 3, and similar steps will therefore not be described in detail here. In the embodiment illustrated in Fig. 4, each node 6a, 6b holds an encryption key, ek, in addition to their respective shares s₁, s₂ of the shared seed.

Initially, in steps denoted (1) and (2) in Fig. 4, a public key, Y, and a Bitcoin address are generated, essentially in the manner described above with reference to steps (1) and (2) of Fig. 3.

Next, in a step denoted (3) in Fig. 4, the nodes 6a, 6b cooperate in generating an encrypted version, E=Encₑₖ(s), of the shared seed under the encryption key, ek, using a multiparty computation protocol, GetEncryptedBackup(), and applying their respective shares s₁, s₂ of the shared seed. The encryption, E, is revealed.

Next, in a step denoted (4) in Fig. 4, the two nodes 6a, 6b cooperate in generating a non-interactive zero-knowledge proof, ZKP, using a multiparty computation protocol, GetProof(), applying their respective shares s₁, s₂ of the shared seed, and based on the chain path agreed on in step (1). The multiparty computation protocol, GetProof(), requires that the nodes 6a, 6b exchange a number of messages with each other over a secure channel. Accordingly, the nodes 6a, 6b collectively act as a prover, similar to the situation described above with reference to Fig. 3.

A verifier, in the form of a third party being in the possession of the encryption key, ek, inspects the blockchain, step (5) in Fig. 4, reads the Bitcoin address and verifies that a certain amount of funds, i.e. 3 BTC, is available on the address, similar to step (5) of Fig. 3 described above. The verifier further receives, in step (6) in Fig. 4, the encrypted version, E, of the shared seed generated in step (3), and the zero-knowledge proof generated in step (4).

The verifier then, in a step denoted (7) in Fig. 4, verifies the non-interactive zero-knowledge proof to get convinced that the encryption, E, is a valid encryption under the encryption key, ek, of the same shared seed as was used for generating the inspected Bitcoin address. This constitutes a proof statement.

Finally, in step (8), based on this knowledge, the verifier acknowledges the correctness of the encrypted version, E, of the seed, and stores the encryption, e.g. as an encrypted backup of the shared seed.

At a later point in time, in a step denoted (9) in Fig. 4, the encrypted version, E, of the shared seed is provided to a decryption service holding a decryption key, dk, corresponding to the encryption key, ek, applied for generating the encrypted version, E, of the shared seed. The decryption service then decrypts the encrypted version, E, of the shared seed, in a step denoted (10) in Fig. 4, and returns a decrypted version of the shared seed, s. Since the correctness of the encrypted seed was verified in step (7), the returned shared seed, s, can be assumed to be correct. Accordingly, this allows the shared seed to be correctly restored from an encrypted backup.

Thus, the method illustrated in Fig. 4, represents a zero-knowledge argument system, wherein the two nodes 6a, 6b, using their respective shares, s₁, s₂ of the shared seed, collective act as a prover and the third party acts as a verifier. The verifier inspecting the blockchain and reading the first Bitcoin address constitutes seed commitment, and the encrypted version, E, of the shared seed constitutes an object generated from the shared seed. The proof statement is the statement that is verified in the verification taking place in step (7).

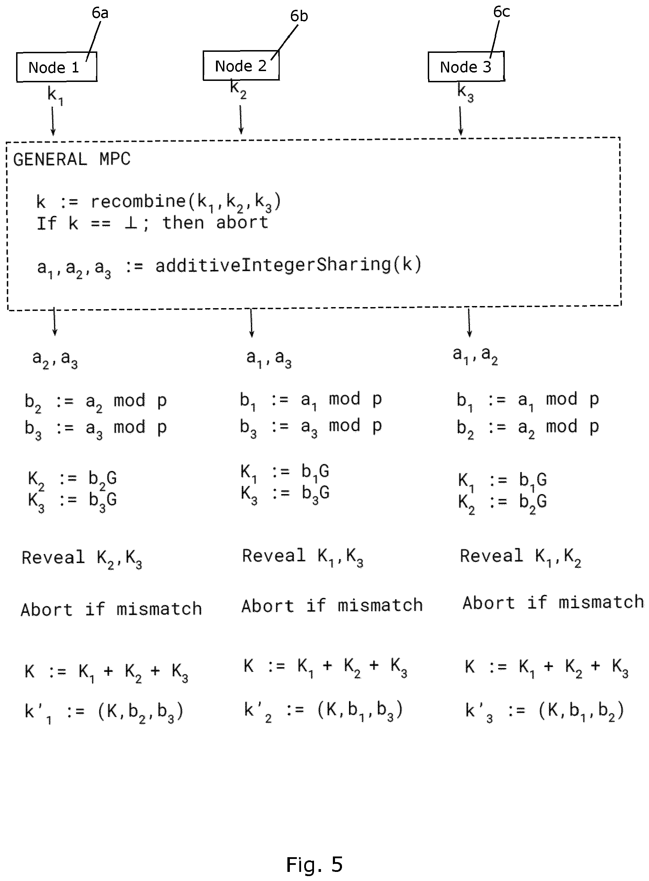

Fig. 5 illustrates conversion of a sharing of a derived shared key using an honest majority protocol, in accordance with a method according to an embodiment of the invention. In the example illustrated in Fig. 5 three nodes 6a, 6b, 6c are involved. However, it should be noted that a similar conversion process could be performed by two nodes, or by four or more nodes.

Each of the three nodes 6a, 6b, 6c initially holds one share of the derived key, k₁, k₂ and k₃, respectively. When performing the conversion of the sharing of the derived shared key, the nodes 6a, 6b, 6c cooperate, using a general multiparty computation protocol and applying their respective shares k₁, k₂, k₃ of the derived shared key, in generating an additive integer sharing of the derived shared key, defining shares a₁, a₂ and a₃. Since this is an additive sharing, a₁+a₂+a₃=k.

During this multiparty computation process, the derived shared key, k, is recombined from the shares, k₁, k₂ and k₃, and the validity of the recombined key is checked, e.g. using information theoretic MACs. If the check reveals that the recombined key is not valid, e.g. if the shares k₁, k₂, k₃ do not form a valid sharing of k, the process is aborted, otherwise the shares a₁, a₂ and a₃ are outputted as will be described below. An invalid key could, e.g., be due to one or more of the nodes acting maliciously. Since the recombination of the key, k, is performed by the nodes 6a, 6b, 6c in cooperation, using a multiparty computation protocol, the recombined key is not revealed to any of the nodes 6a, 6b, 6c.

The multiparty computation process performed by the three nodes 6a, 6b, 6c in cooperation may include the nodes 6a, 6b, 6c exchanging a number of messages with each other via pairwise secure channels. In the example illustrated in Fig. 5, the general multiparty computation (MPC) is simply represented abstractly as a box, and the individual messages exchanged between the nodes are not illustrated.

In the case that it is confirmed that the recombined key, k, is valid, the additive integer shares, a₁, a₂ and a₃ are revealed to the nodes 6a, 6b, 6c , in such a manner that node 6a receives shares a₂ and a₃, node 6b receives shares a₁ and a₃, and node 6c receives shares a₁ and a₂. Accordingly, none of the nodes 6a, 6b, 6c receives all additive shares, a₁, a₂ and a₃, and therefore none of the nodes 6a, 6b, 6c is able to compute the key, k, on its own. However, any two of the nodes 6a, 6b, 6c in combination hold all three additive shares, and therefore any two of the three nodes 6a, 6b, 6c will be able to jointly compute the key, k, from their shares. The shares held by each node 6a, 6b, 6c, i.e. (a₂,a₃), (a₁,a₃) and (a₁,a₂), respectively, thus forms a replicated integer sharing of the key, k.

The nodes 6a, 6b, 6c then engage in a special multiparty computation protocol, using their respective shares (a₂,a₃), (a₁,a₃), (a₁,a₂), in order to convert the sharing of the derived shared key, k. This is done in the manner described below.

Each node computes new shares, bᵢ, where bᵢ:=aᵢ mod p, where p is a prime, from the respective shares, aᵢ, held by the respective nodes 6a, 6b, 6c. Furthermore, each node 6a, 6b, 6c computes Kᵢ:=bᵢ·G, for each of their respective shares, bᵢ, where G is the base curve point defined by the digital signature scheme which it is intended to apply. The nodes 6a, 6b, 6c broadcast their respective computed Kᵢ shares. Accordingly, node 6a broadcasts K₂ and K₃, node 6b broadcasts K₁ and K₃, and node 6c broadcasts K₁ and K₂. Accordingly, each of K₁, K₂ and K₃ is now revealed to all three nodes 6a, 6b, 6c.

Each node 6a, 6b, 6c then compares the respective Kᵢ shares received from the other nodes 6a, 6b, 6c to the corresponding Kᵢ shares computed by themselves, and aborts the process in the case that a mismatch is revealed. If the process is not aborted, each node 6a, 6b, 6c computes K:=K₁+K₂+K₃, and each node 6a, 6b, 6c is accordingly now in the possession of K. Due to the homomorphic properties of exponentiation in the curve group, it is ensured that K=k·G.

Finally, each node generates a replicated share, k'ᵢ, based on the public key, K, and the respective shares, bᵢ, held by the respective nodes 6a, 6b, 6c. Thus, node 6a generates k'₁:=(K,b₂,b₃), node 6b generates k'₂:=(K,b₁,b₃), and node 6c generates k'₃:=(K,b₂,b₃). The shares k'₁, k'₂ and k'₃ constitutes shares of a converted sharing of the derived shared key, held by the respective nodes 6a, 6b, 6c. The converted sharing is a sharing over the finite field Zₚ which is the same finite field that is used by the selected signature scheme, and each share includes K which authenticates the sharing.

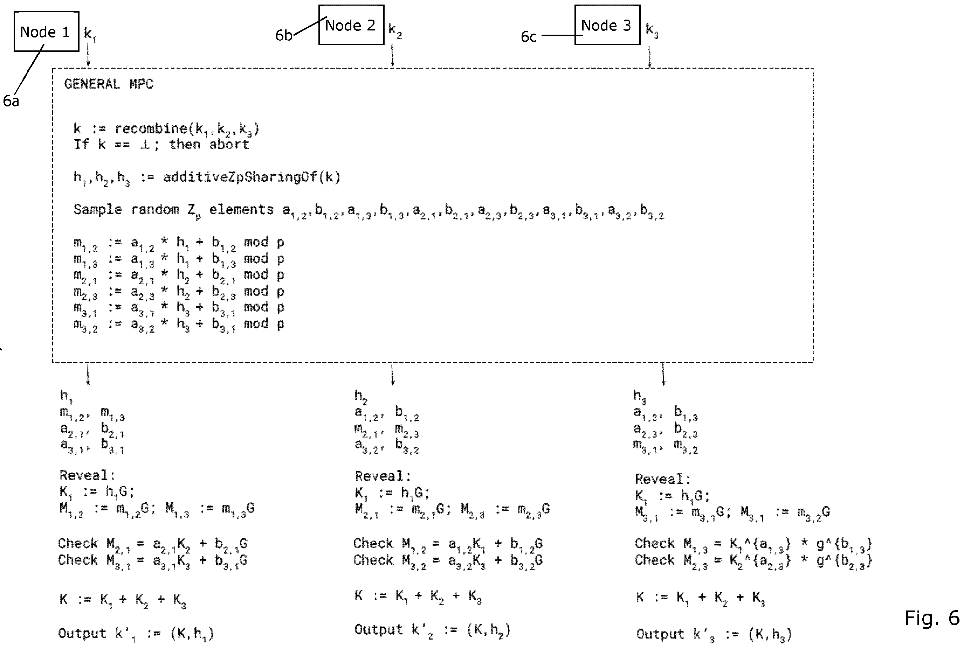

Fig. 6 illustrates conversion of a sharing of a derived shared key using a dishonest majority protocol, in accordance with a method according to an embodiment of the invention. In the example illustrated in Fig. 6 three nodes 6a, 6b, 6c are involved. However, it should be noted that a similar conversion process could be performed by two nodes, or by four or more nodes.

Initially, each node 6a, 6b, 6c holds a share of the derived shared key, i.e. node 6a holds share k₁, node 6b holds share k₂, and node 6c holds share k₃. The nodes 6a, 6b, 6c engage in a general multiparty computation protocol, using their respective shares, k₁, k₂, k₃, where the key, k, is recombined and checked for validity, and the process is aborted in the case that the recombined key, k, is not valid, similarly to the situation described above with reference to Fig. 5.

An additive sharing of the derived shared key, k, over a finite field Zₚ, is created, the additive sharing defining shares h₁, h₂ and h₃. This could, e.g., be performed essentially in the manner described above with reference to Fig. 5, except that in Fig. 6 reduction modulo p is also performed by the general multiparty protocol. Furthermore, a number of random elements of Zₚ are sampled, and information theoretic MACs, m_{i,j} are computed, based on the additive shares, hᵢ, and the sampled random elements.

The additive shares, hᵢ, the information theoretic MACs, m_{i,j}, and the sampled random elements are revealed to the nodes 6a, 6b, 6c in the following manner. h₁, m_{1,2}, m_{1,3}, a_{2,1}, b_{2,1}, a_{3,1} and b_{3,1} are revealed to node 6a; h₂, m_{2,1}, m_{2,3}, a_{1,2}, b_{1,2}, a_{3,2} and b_{3,2} are revealed to node 6b; and hs, m_{3,1}, m_{3,2}, a_{1,3}, b_{1,3}, a_{2,3} and b_{2,3} are revealed to node 6c.

Each node 6a, 6b, 6c then computes and reveals Kᵢ:=hᵢ·G and M_{i,j}:=m_{i,j}·G, corresponding to the respective additive shares, hᵢ, and information theoretic MACs, m_{i,j}, held by the respective nodes 6a, 6b, 6c, where G is the base curve point defined by the digital signature scheme which it is intended to apply.

Each node 6a, 6b, 6c then uses the MAC keys received as output from the general multiparty protocol to check the corresponding MAC codes and Kᵢ values revealed by the other nodes 6a, 6b, 6c, thus validating the correctness of the received Kᵢ values. Each node 6a, 6b, 6c aborts the process in the case that a MAC check fails. If the process is not aborted, each node 6a, 6b, 6c computes K:=K₁+K₂+K₃, and each node 6a, 6b, 6c is accordingly now in the possession of K.

Finally, each node generates a replicated share, k'ᵢ, based on the public key, K, and the respective shares, hᵢ, held by the respective nodes 6a, 6b, 6c. Thus, node 6a generates k'₁:=(K,h₁), node 6b generates k'₂:=(K,h₂), and node 6c generates k'₃:=(K,h₃). The shares k'₁, k'₂ and k'₃ constitute shares of a converted sharing of the derived shared key, held by the respective nodes 6a, 6b, 6c. The converted sharing is a sharing over the finite field Zₚ which is the same finite field that is used by the selected signature scheme.

## Claims

1. A method for deriving a cryptographic key for performing a digital signature, the method comprising the steps of:
- generating a shared seed, the shared seed being shared among two or more nodes,
- deriving a derived shared key and a derived chain code from the shared seed by means of secure multiparty computation performed by the two or more nodes in cooperation, the derived shared key being shared among the two or more nodes,
- converting the sharing of the derived shared key into a converted sharing over a finite field defined by a digital signature scheme, the converted sharing of the key thus being in a format suitable for performing digital signatures using the digital signature scheme, and
- performing a digital signature by means of the converted sharing of the key and using a signature protocol in accordance with the digital signature scheme.

2. A method according to claim 1, wherein the step of deriving a derived shared key and a derived chain code comprises the steps of:
- deriving a first derived shared key and a first derived chain code from the shared seed, the first derived shared key being shared among the two or more nodes, and
- deriving at least one further derived shared key and at least one further derived chain code from the first derived shared key and the first derived chain code, the at least one further derived shared key being shared among the two or more nodes.

3. A method according to claim 2, wherein the step of deriving at least one further derived shared key and at least one further derived chain code comprises iteratively deriving shared keys and chain codes from the shared key and chain code from the previous iteration.

4. A method according to any of the preceding claims, wherein the converted shared key is shared among the two or more nodes by means of a type of sharing which differs from a type of sharing applied for sharing the derived shared key among the two or more nodes.

5. A method according to any of the preceding claims, wherein the shared seed and the shared derived key are stored at the two or more nodes as authenticated secret sharings.

6. A method according to any of the preceding claims, wherein the shared seed and the shared derived key are stored at the two or more nodes by means of sharings which are suitable for general secure multiparty computation protocols.

7. A method according to any of the preceding claims, wherein the shared seed and the shared derived key are stored at the two or more nodes by means of secret sharings based on information theoretic message authentication codes.

8. A method according to any of the preceding claims, wherein the step of converting the sharing of the derived shared key comprises converting the shares of the derived shared key, and wherein the converted key shares include a Feldman commitment or a Pedersen commitment of the derived shared key.

9. A method according to any of the preceding claims, wherein the step of converting the sharing of the derived shared key comprises the steps of:
- the two or more nodes computing an additive integer sharing of the derived shared key, using an honest majority general multiparty computation protocol, and revealing a subset of the integer shares of the additive integer sharing to each of the two or more nodes, such that the shares together form a replicated integer sharing of the derived shared key,
- the two or more nodes each performing local, non-interactive computation to convert their respective integer shares into shares modulo p, where p is an integer, the two or more nodes thereby obtaining a secret sharing of the derived key modulo p, and
- the two or more nodes running a specialized secure multiparty computation protocol based on their respective converted integer shares, so as to compute and reveal k·G, where G is a generator related to the finite field and k is the derived shared key.

10. A method according to any of claims 1-8, wherein the step of converting the sharing of the derived shared key comprises the steps of:
- using a dishonest majority general multiparty computation protocol, the two or more nodes computing additive shares (k₁, k₂, ..., kₙ), in the finite field, of the derived shared key (k),
- using the dishonest majority general multiparty computation protocol, each node (Nᵢ) generating, for each of the other nodes (Nⱼ), an information theoretic message authentication key (K_{i,j}=(a_{i,j},b_{i,j})) and computing a corresponding message authentication code (M_{i,j}=a_{i,j}·kᵢ+b_{i,j}), over the finite field, of the node's (Nᵢ) additive share (kᵢ) of the derived shared key, where a_{i,j} and b_{i,j} are random elements of the finite field, and where the general multiparty computation protocol reveals, to each of the nodes (Nᵢ) its additive share (kᵢ) of the derived shared key and the respective message authentication codes (M_{j,i}) related to the node (Nᵢ),
- each node (Nᵢ) broadcasting a Feldman commitment (kᵢ·G) of its additive share (kᵢ) of the derived shared key, where G is a generator related to the finite field, and sending to each of the other nodes (Nⱼ) a Feldman commitment (M_{i,j}·G) to the respective message authentication code (M_{i,j}),
- each node (Nᵢ), for each of the other nodes (Nⱼ), checking the received Feldman commitment (kⱼ·G) by checking that M_{j,i}·G = a_{j,i}·(kⱼ·G) + b_{j,i}·G, and aborting the protocol if this is not the case, and
- each node (Nᵢ) computing the product of the Feldman commitments of the additive shares of the derived shared keys (K=k₁·G + k₂·G + ... + kₙ·G), and each node (Nᵢ) outputting a converted share (K, kᵢ).

11. A method according any of the preceding claims, further comprising the steps of the two or more nodes generating an object from the shared seed and providing the generated object to a third party holding a commitment to the shared seed.

12. A method according to claim 11, further comprising the step of verifying the generated object by means of a zero-knowledge proof and using a zero-knowledge argument system, wherein:
- the two or more nodes, using their respective shares of the shared seed, collectively act as a prover in the zero-knowledge argument system,
- the third party acts as verifier in the zero-knowledge argument system, and
- a statement being proved by the zero-knowledge proof is a statement convincing the verifier that the seed shared by the two or more nodes is the same seed as the seed being defined by the seed commitment held by the verifier as well as the same seed being used for generating the object.

13. A method according to claim 11 or 12, further comprising the step of the two or more nodes agreeing on a chain path, and wherein the generated object is a public part of the derived shared key according to the chain path, and wherein the step of verifying the generated object comprises the verifier verifying that the public part of the derived shared key is correctly derived from the shared seed, using the commitment to the shared seed and the chain path.

14. A method according to claim 11 or 12, wherein the generated object is an encryption of the shared seed under an encryption key, ek, and wherein the step of verifying the generated object may comprise the verifier verifying that the encryption of the shared seed is a correct encryption under ek, using as public information the encryption key, ek, and the commitment to the shared seed.

15. A method according to any of claims 11-13, wherein the commitment to the shared seed includes a chain path and a public key derived from the shared seed, and/or a cryptocurrency address derived from the public part of a derived key derived from the seed, using the chain path.
